Europäisches Patentamt

European Patent Office

Office européen des brevets

(19)

(11) Publication number: **0 160 305**
**B1**

(12) **EUROPEAN PATENT SPECIFICATION**

(45) Date of publication of patent specification: **25.10.89**

(51) Int. Cl.⁴: **B 25 J 17/00, F 16 M 11/18**

(21) Application number: **85105298.5**

(22) Date of filing: **01.05.85**

(54) Carrying device.

(30) Priority: **02.05.84 JP 64472/84**
**20.06.84 JP 90776/84**
**28.11.84 JP 180622/84**

(43) Date of publication of application:
**06.11.85 Bulletin 85/45**

(45) Publication of the grant of the patent:
**25.10.89 Bulletin 89/43**

(84) Designated Contracting States:
**DE FR GB**

(56) References cited:
**EP-A-0 024 433**
**DD-A- 209 588**
**DE-A-2 855 132**
**GB-A-2 145 691**
**US-A-4 453 883**

(73) Proprietor: **KABUSHIKI KAISHA TOKUDA SEISAKUSHO**
**25-22, Sagamigaoka 6-chome**
**Zama-shi Kanagawa 228 (JP)**

(72) Inventor: **Jo, Hidetaka c/o K.K. Tokuda Seisakusho**
**25-22, Sagamigaoka 6-Chome**
**Zama-Shi Kanagawa-Ken (JP)**
Inventor: **Iwami, Munenori c/o K.K. Tokuda Seisakusho**
**25-22, Sagamigaoka 6-Chome**
**Zama-Shi Kanagawa-Ken (JP)**
Inventor: **Kuriyama, Noboru c/o K.K. Tokuda Seisakusho**
**25-22, Sagamigaoka 6-Chome**
**Zama-Shi Kanagawa-Ken (JP)**

(74) Representative: **Reichel, Wolfgang, Dipl.-Ing. et al**
**Reichel und Reichel Parkstrasse 13**
**D-6000 Frankfurt am Main 1 (DE)**

Courier Press, Leamington Spa, England.

## Description

### Background of the invention

The present invention generally relates to 'a carrying device. More particularly, the invention relates to a carrying device for carrying a work to be processed in a vacuum processing system for automatically performing a vacuum process.

Usually, the vacuum processing system includes a vacuum process chamber for performing a vacuum process such as an etching or spattering. On the inlet side and outlet side of the vacuum process chamber are provided a pair of load lock chambers communicating with the atmosphere. In each of the load lock chambers is provided a carrying device for carrying a work from the outside of the chamber thereinto or from the chamber to the outside thereof.

As such carrying devices, there are conventionally used conveyor type ones, whereas in the case of the conveyor type device there is a disadvantage that the device is large-sized and complex thereby to cause the entire vacuum processing system to become bulky. Particularly, there is such a disadvantage that, as the load lock chamber enlarged in the scale requires a long time in the evacuation, the vacuum process time becomes long, reducing the working efficiency.

In general, there are known material handling and supporting devices (US—A—2 884 144) which permit a respective load number to be yawed, pitched or moved along a vertical plane or rolled about a horizontal axis. Such a device, however, is rather complicated and large and comprises an elongated bed or frame of truss construction with spaced load supports for handling the member. Each load support comprises several toggle linkages for biasing a base member by means of springs. Arms are pivotally connected to the same shafts to which the links are also pivotally connected, in order to permit a rocking movement of the base member. For allowing the above mentioned different movements a lot of further rather complicated connection members are required so that such a material handling device is not suitable for the intended use.

A further, rather large supporting and guiding device with pivotally coupled arms is known from FR—A—2 391 031. This device is adapted to support and guide a movable working platform, so as to keep the platform at a constant angle with regard to the horizontal direction. A first arm is articulated to a support post and is pivoted in a vertical plane. A second arm supporting and guiding the platform at one end is articulated to the first arm at the other end and is also pivoted in the vertical plane. Besides the fact that such a device is rather large in its vertical dimension it requires complex transmission, drive and control means for moving and controlling the arms.

### Summary of the invention

It is an object of the present invention to provide a small-sized carrying device to make a vacuum processing system compact.

According to this invention, there is provided a carrying device comprising a first arm mounted on a support base and adapted to be horizontally rotatable about one end thereof by a rotational drive source, a second arm horizontally rotatably attached to the other end of the first arm, and a power transmitting mechanism for transmitting a rotary motion of the first arm to rotate the second arm. Said mechanism has a stationary wheel fixed to said support base coaxially with a rotary shaft of said first arm, a stationary wheel fixed to said support base coaxially with a rotary shaft of said first arm, a rotary wheel attached to a rotary shaft of said second arm coaxially with said rotary shaft of said second arm, and a belt provided between said stationary wheel and said rotary wheel.

Moreover, according to another aspect of the invention, there is provided a carrying device assembly having two carrying device units each of which comprises: a first arm mounted on a support base and adapted to be horizontally rotatable about one end thereof by a rotational drive source; a second arm horizontally rotatably attached to the other end of said first arm; and a power transmitting mechanism having a stationary wheel fixed to said support base coaxially with a rotary shaft of said first arm, a rotary wheel attached to a rotary shaft of said second arm coaxially with said rotary shaft of said second arm, and a belt provided between said stationary wheel and said rotary wheel, the two carrying device units being symmetrically arranged in the form of a pantograph, respective first arms being adapted to be symmetrically rotatable through a gear transmission mechanism, respective second arms being interconnected at the distal ends thereof by a carrier plate of a work to be processed.

The nature, utility, and further features of this invention will be more clearly apparent from the following detailed description with respect to preferred embodiments of the invention when read in conjunction with the accompanying drawings briefly described below.

### Brief description of the drawings

In the accompanying drawings:

Fig. 1 is a plan view showing a carrying device of the invention;

Fig. 2 is a front view of the carrying device shown in Fig. 1;

Fig. 3 is a schematic plan view showing a carrying device shown in Fig. 1 as applied to a vacuum processing system;

Fig. 4 is a plan view showing a carrying device assembly of the invention;

Fig. 5 is a front view of the carrying device assembly shown in Fig. 4;

Figs 6 and 7 are plan and longitudinal sectional views of a carrier plate, respectively;

Fig. 8 is a diagram describing a relation between an opening area ratio and a positional deviation occurrence frequency; and

Fig. 9 is a longitudinal sectional view showing a vacuum processing system having applied thereto a carrying device assembly shown in Fig. 4.

## Detailed description of the invention

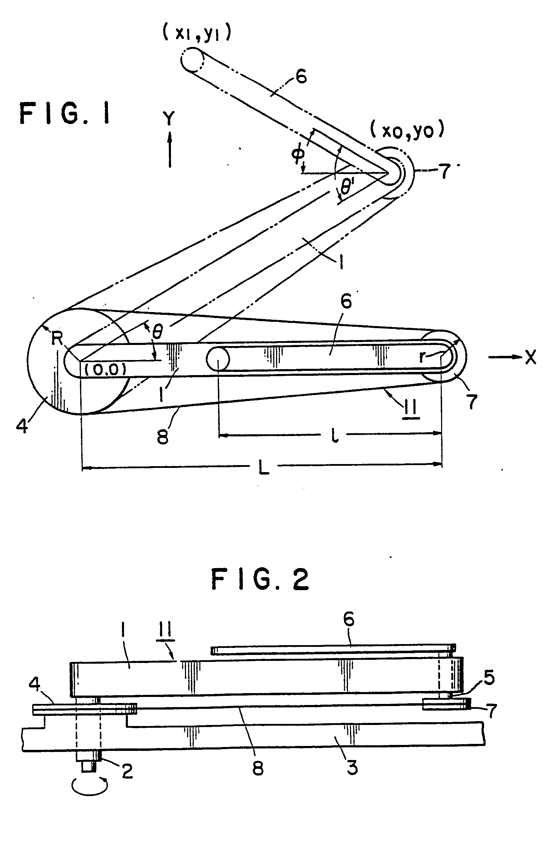

Referring first to Figs. 1 and 2 showing a first embodiment of a carrying device 11 according to the invention, the device 11 has first arm 1 one end of which is fixed to a drive shaft 2 connected to an unshown rotational drive source such as a motor. The drive shaft 2 is provided through a support base 3 and rotatably supported by the support base 3. To the support base 3 is fixed a stationary wheel 4 arranged coaxially with the drive shaft 2. Moreover, at the other end of the first arm 1, there is rotatably provided a rotary shaft 5, the upper end of which is fixed to one end of a second arm 6 and the lower end of which is fixed to a rotary wheel 7. The second arm 6 is formed thinner than the first arm 1 to relieve the weight load on the drive shaft 2. Further, between the stationary wheel 4 and the rotary wheel 7 is provided a belt 8 for transmitting rotary motion of the first arm 1 to the second arm 6.

In the case of this embodiment, a work to be processed is put on the distal end of the second arm 6. When the drive shaft 2 is revolved, the first arm 1 is swung and, concurrently with revolution of the rotary wheel 7 by the belt 8, the second arm 6 is caused to swing in the direction opposite to that of the first arm 1. Therefore, the work can be carried to transfer to a voluntary position.

In this respect, the transfer position of the work, that is, the distal end position $(x_1, y_1)$ of the second arm 6 can be determined by the following calculation.

First, the center position $(x_0, y_0)$ of the rotary wheel 7 can be given such that

$$x_0 = L \cos \theta \text{ and } y_0 = L \sin \theta,$$

wherein

L: the span of the first arm 1 and
$\theta$: a rotational angle of the first arm 1.
The distal end position $(x_1, y_1)$ can be given such that

$$x_1 = x_0 - l \cos (\theta' - \theta)$$

$$y_1 = y_0 + l \sin (\theta' - \theta)$$

Since $\theta' r = \theta R$

$$x_1 = L \cos \theta - l \cos [(R/r - 1)\theta]$$

$$y_1 = L \sin \theta + l \sin [(R/r - 1)\theta]$$

$$(R/r - 1)\theta = \phi,$$

wherein

l: the span of the second arm,
$\theta'$: a rotational angle of the second arm 6,
r: the radius of the rotary wheel 7,
R: the radius of the stationary wheel 4, and
$\phi$: $\theta' - \theta$.
Like this, the work can be carried to a predetermined position by properly setting the span L of the first arm 1, the span l of the second arm 6, the radius R of the stationary wheel 4, and the radius r of the rotary wheel 7. For example, when L=l and R=2r, the distal end of the second arm 6 linearly moves on y-axis because $x_1 = 0$ and $y_1 = (L + l) \sin \theta$.

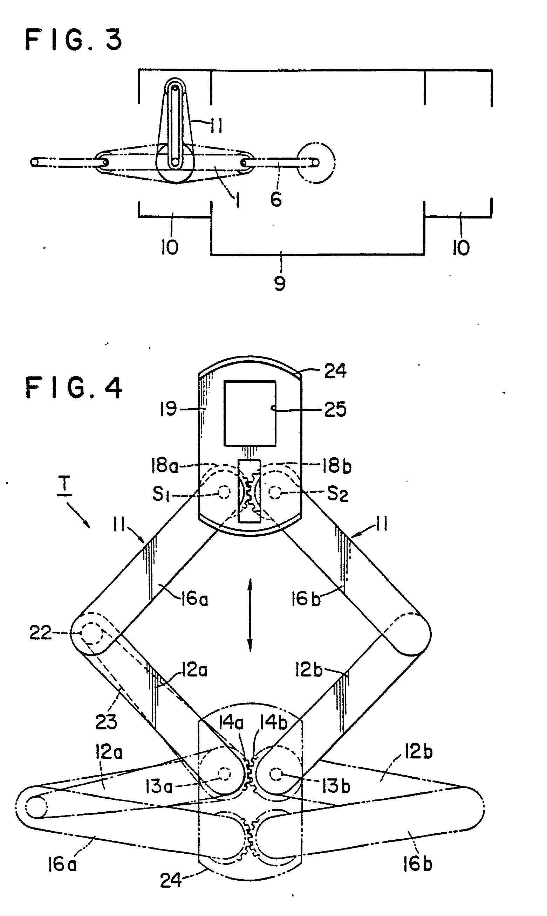

If the carrying devices of this type in each of which the distal end trace of the second arm 6 is linear are used for carrying works to be processed, as shown in Fig. 3, in a pair of load lock chambers 10, 10 connected through unshown gate valves to the inlet side and outlet side of a vacuum process chamber, the dimension in the width as well as in the length of the load lock chambers 10 can be greatly decreased. In Fig. 3, only one of the carrying devices is shown.

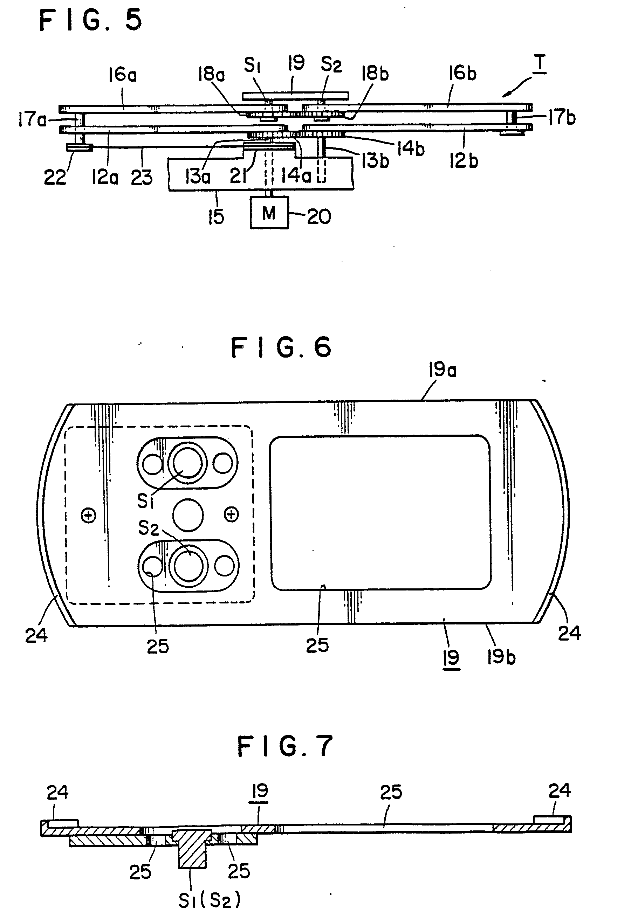

Referring now to Figs. 4 and 5 showing a carrying device assembly T comprising the two carrying device units. A pair of carrying device units are arranged symmetrically to each other, and more particularly, a pair of first arms 12a, 12b are fixed to the upper ends of a pair of drive shafts 13a, 13b, respectively. The drive shafts 13a, 13b coaxially support a pair of gears 14a, 14b, respectively. The first arms 12a, 12b are symmetrically arranged to each other so that the gears 14a, 14b mesh with each other, and the drive shafts 13a, 13b are rotatably supported on a support base 15 so that the first arms 12a, 12b are symmetrically rotatable or swingable about the drive shafts 13a, 13b.

Moreover, to the other ends of the first arms 12a, 12b are connected a pair of second arms 16a, 16b, respectively, through a pair of rotary shafts 17a, 17b. The rotary shafts 17a, 17b are secured to one end of the second arms 16a, 16b, respectively, so that the second arms 16a, 16b are horizontally rotatable about the axes of the rotary shafts 17a, 17b, respectively. Further, the second arms 16a, 16b have a pair of gears 18a, 18b at their other ends, respectively. The other ends of the second arms 16a, 16b support a carrier plate 19 for carrying a work put thereon through two shafts $S_1$, $S_2$, respectively. The two shafts $S_1$, $S_2$ hold two gears 18a, 18b meshed with each other, respectively.

Furthermore, in this embodiment on one side (at the left in the drawings), the drive shaft 13a of the first arm 12a is provided through the support base 15 and connected to a rotational drive source 20 such as a motor, while on the support base 15 is provided a stationary wheel 21 arranged coaxially with the drive shaft 13a connected to the rotational drive source 20. Still more, to the lower end of the rotary shaft 17a of the second arm 16a connected to the first arm 12a is attached a rotary wheel 22 having a diameter of half of that of the stationary wheel 21, and between the stationary wheel 21 and the rotary wheel 22 is provided a belt 23 as a power transmitting mechanism, to thereby transmit a rotary motion of the first arm 12a to the second arm 16a.

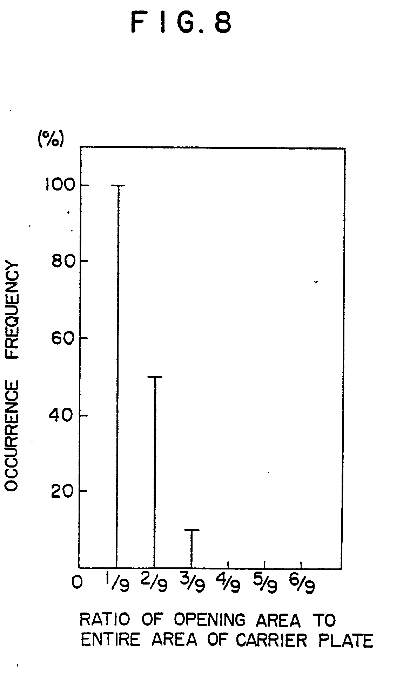

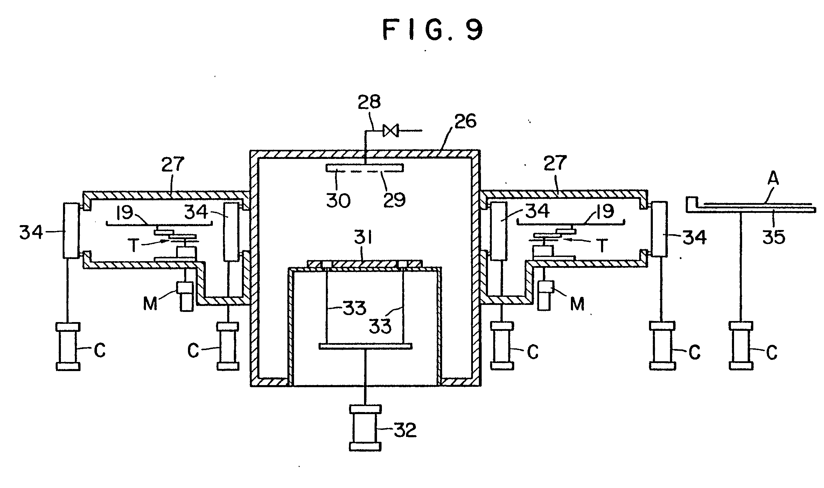

Besides above, as shown in Figs. 6 and 7, the carrier plate 19 has a pair of straight side edges 19a, 19b opposite to each other and a pair of arc edges 24, 24 for carrying the work to be referred to as A (Fig. 9). Each arc edge is formed with a slightly upwardly stepped stopper portion 24. Yet more, the carrier plate 19 is formed with an opening 25 having an area not smaller than one-third of the entire area of the carrier plate 19. This is because, as will be understood from Fig. 8, when given a value not less than 1/3 in terms of the ratio between the opening area and the entire area of the plate 19, the area is sufficient to prevent occurrence such as of a positional deviation of the work because stagnant gas between the plate 19 and the work A can be discharged effectively.

In this embodiment, when the rotational drive source 20 rotates the drive shaft 13a with the gear 14a, the drive shaft 13b revolves in an opposite direction with the gear 14b, so that the first arms 12a, 12b swing symmetrically to each other. On the other hand, with the rotation of the first arm 12a, the rotary wheel 22 revolves through the belt 23, causing the second arm 16a to swing in the opposite direction to the first arm 12a. The swing motion of the second arm 16a causes the second arm 16b to swing in the direction opposite to that of the first arm 12b because the end of the second arm 16b supports the carrier plate 19. At this time, the meshing position between the two gears 18a, 18b changes in accordance with the swing motion of each carrying device unit. If the diameter ratio is set to be 2:1 between the stationary wheel 21 and the rotary wheel 22, the carrier plate 19 travels linearly, so that the work put on the carrier plate 19 can be linearly carried in a stable manner.

Referring now to Fig. 9 showing a vacuum processing system to which the above-described carrying device assembly T is applied, a vacuum process chamber 26 for a vacuum process such as an etching or spattering is provided with a pair of load lock chambers 27, 27 connected to the inlet side and outlet side thereof, respectively. Inside of the vacuum process chamber 26 is disposed an upper electrode 30 connected to a gas feed line 28 and formed with a plurality of gas feed holes 29. At a lower position thereof is provided a lower electrode 31. Moreover, below the lower electrode 31, there are disposed pusher pins 33, 33 adapted to vertically travel through the lower electrode 31 by means of an air cylinder 32. In each of the load lock chambers 27, 27 is provided the carrying device assembly T with the carrier plate 19, whereby the vacuum processing system is adapted to carry to transfer the work A from the outside of the chamber thereinto and from the inside of the chamber 26 to the outside thereof. A gate valve 34 is provided between the vacuum process chamber 26 and each load lock chamber 27, as well as between each load lock chamber 27 and the outside of the system.

In the aforesaid vacuum processing system, the work A is forwarded to a predetermined position at the inlet side of the system with a setting mechanism 35 installed outside thereof, and the work A is put on the carrying device 11 in the load lock chamber 27 by opening the gate valve 34 on the inlet side of this load lock chamber 27. Then, after evacuation of the load lock chamber 27 on the inlet side, the work A is moved into the vacuum process chamber 26 by opening the gate valve 34 on the vacuum chamber side of this load lock chamber 27, and upwardly lifted from the carrier plate 19 of the carrying device assembly T by raising the pusher pins 33. At this time, the pusher pins 33 are raised outside of side edges 19a, 19b of the carrier plate for lifting the work A therefrom. Under this condition, the carrying device assembly T returns to the load lock chamber 27 and thereafter the gate valve 34 closes, while causing the pusher pins 33 to descend to put the work A on the lower electrode 31. Then, the work A is subjected to the vacuum process. After this process, the work A is again lifted up by the pusher pins 33 and the carrying device assembly T of the load lock chamber 27 on the outlet side of the system is stretched into the vacuum process chamber 26. Then, the pusher pins 33 are lowered so that the work A is put on the carrier plate 19 of the carrying device assembly T. Thereafter, the work A is discharged out of the vacuum processing system.

The setting mechanism 35 and the gate valves 34 are operated by cylinders C, C, ...C, respectively.

According to the present invention, even a small-sized carrying device can obtain a relatively large transfer distance, so that a load lock chamber to be adapted for accommodation of the carrying device can be greatky small-sized. Moreover, as a rotational drive source, there is needed no more than one, thus resulting in a high economy.

Further, an opening is formed in a carrier plate, without the possibility of leaving stagnant gases between the carrier plate and a work, thus effectively preventing positional deviations of the work due to such gases.

## Claims

1. A carrying device, comprising:
a) a first arm (1) mounted on a support base (3) and adapted to be horizontally rotatable about one end thereof by a rotational drive source;
b) a second arm (6) horizontally rotatably attached to the other end of said first arm (1); and
c) a power transmitting mechanism having a stationary wheel (4) fixed to said support base (3) coaxially with a rotary shaft of said first arm, a rotary wheel (7) attached to a rotary shaft of said second arm coaxially with said rotary shaft of said second arm (6), and a belt (8) provided between said stationary wheel (4) and said rotary wheel (7).

2. A carrying device according to claim 1, wherein said first arm (1) and said second arm (6) are made equal in length to each other; and the ratio of the diameter of said stationary wheel (4) to that of said rotary wheel (7) is determined to be 2:1.

3. A carrying device assembly having two carrying device units each of which comprises:
a) a first arm (12a) mounted on a support base (15) and adapted to be horizontally rotatable about one end thereof by a rotational drive source;

b) a second arm (16a) horizontally rotatably attached to the other end of said first arm (12a); and

c) a power transmitting mechanism having a stationary wheel (21) fixed to said support base coaxially with a rotary shaft of said first arm (12a), a rotary wheel (22) attached to a rotary shaft (17a) of said second arm (16a) coaxially with said rotary shaft of said second arm, and a belt (23) provided between said stationary wheel (21) and said rotary wheel (22), the two carrying device units being symmetrically arranged in the form of a pantograph, respective first arms (12a, 12b) being adapted to be symmetrically rotatable through a gear transmission mechanism, respective second arms (16a, 16b) being interconnected at the distal ends thereof by a carrier plate (19) of a work to be processed.

4. A carrying device assembly according to claim 3, wherein said carrier plate (19) is formed with an opening (25).

5. A carrying device assembly according to claim 4, wherein said opening (25) of said carrier plate 19) has an area not smaller than one-third of the entire area of said carrier plate.

**Patentansprüche**

1. Tragevorrichtung, aufweisend:

a) einen ersten Arm (1), der auf einer Trägerbasis (3) angebracht ist und dazu ausgelegt ist, mittels einer Rotationsantriebsquelle um eines seiner Enden horizontal drehbar zu sein;

b) einen zweiten Arm (6), der am anderen Ende des ersten Arms (1) horizontal drehbar befestigt ist; und

c) einen Kraftübertragungsmechanismus, der ein stationäres Rad (4), das an der Trägerbasis (3) koaxial mit einer Rotationswelle des ersten Armes befestigt ist, ein Drehrad (7), das an einer Rotationswelle des zweiten Arms koaxial mit der Rotationswelle des zweiten Arms (6) angebracht ist, und einer Riemen (8) aufweist, der zwischen dem stationären Rad (4) und dem Drehrad (7) vorgesehen ist.

2. Tragevorrichtung nach Anspruch 1, in welcher der erste Arm (1) und der zweite Arm (6) bezüglich zueinander mit der gleichen Länge ausgebildet sind; und das Verhältnis des Durchmessers vom stationären Rad (4) zu dem des Drehrades (7) zu 2:1 festgelegt ist.

3. Tragevorrichtungsanordnung mit zwei Tragevorrichtungseinheiten, von denen jede aufweist:

a) einen ersten Arm (12a), der auf einer Trägerbasis (15) angebracht ist und dazu ausgelegt ist, mittels einer Rotationsantriebsquelle um eines seiner Enden horizontal drehbar zu sein;

b) einen zweiten Arm (16a), der am anderen Ende des ersten Armes (12a) horizontal drehbar befestigt ist; und

c) einen Kraftübertragungsmechanismus, der eine stationäres Rad (21), das an der Trägerbasis koaxial mit einer Rotationswelle des ersten Arms (12a) befestigt ist, ein Drehrad (22), das an einer Rotationswelle (17a) des zweiten Arms (16a) koaxial mit der Rotationswelle des zweiten Arms angebracht ist, und einen Riemen (23) aufweist, der zwischen dem stationären Rad (21) und dem Drehrad (22) vorgesehen ist, wobei die beiden Tragevorrichtungseinheiten symmetrisch in Form eines Pantographen angeordnet sind, die jeweiligen ersten Arme (12a, 12b) so ausgelegt sind, daß sie symmetrisch über einen Getrieberadübertragungsmechanismus drehbar sind, und wobei die jeweiligen zweiten Arme (16a, 16b) an ihren distalen Enden über eine Trägerplatte (19) eines zu bearbeitenden Werkstücks miteinander verbunden sind.

4. Tragevorrichtungsanordnung nach Anspruch 3, in welcher die Trägerplatte (19) mit einer Öffnung (25) ausgebildet ist.

5. Tragevorrichtungsanordnung nach Anspruch 4, in welcher diese Öffnung (25) der Trägerplatte (19) eine Fläche umfaßt, die nicht kleiner als ein Drittel der gesamten Fläcne der Trägerplatte ist.

**Revendications**

1. Un dispositif transporteur comportant:

(a) un premier bras (1) monté sur une embase support (3) et adapté pour pouvoir être entraîné en rotation horizontalement autour d'une de ses extrémités par une source d'entraînement rotative;

(b) un second bras (6) monté rotatif à l'autre extrémité dudit premier bras (1); et

(c) un mécanisme de transmission de l'énergie comprenant une roue stationnaire (4) fixée à ladite embase support (3) coaxialement à un arbre rotatif dudit premier bras, une roue rotative (7) solidaire d'un arbre rotatif dudit second bras coaxialement audit arbre rotatif dudit second bras (6), et une courroie (8) prévue entre ladite roue stationnaire (4) et ladite roue rotative (7).

2. Un dispositif transporteur selon la revendication 1, dans lequel ledit premier bras (1) et ledit second bras (6) sont prévus d'égale longueur, et le rapport du diamètre de ladit roue stationnaire (4) à celui de ladite roue rotative (7) est fixé à 2:1.

3. Un assemblage de dispositifs transporteurs comportant deux unités de dispositifs de transport comprenant chacune:

(a) un premier bras (12a) monté sur une embase support (15) et adapté pour pouvoir être entraîné en rotation horizontalement autour d'une de ses extrémités par une source d'entraînement en rotation;

(b) un deuxième bras (16a) attaché rotatif horizontalement à l'autre extrémité dudit premier bras (12a); et

(c) un mécanisme de transmission de l'énergie comportant une roue stationnaire (21) fixée à ladite embase support, coaxialement à un arbre rotatif dudit premier bras (12a), une roue rotative (22) attachée à un arbre rotatif (17a) dudit second bras (16a) coaxialement audit arbre rotatif dudit second bras, et une courroie (23) prévue entre ladite roue stationnaire (21) et ladite roue rotative (22), les deux unités de dispositifs transporteurs étant agencées symétriquement en forme de pantographe, des premiers bras respectifs (12a, 12b) étant adaptés pour pouvoir être entraînés en rotation par l'intermédiaire d'un mécanisme à transmission par engrenages, des seconds bras respectifs (16a, 16b) étant interconnectés à leur extrémité distale par un plateau porteur (19) d'un ouvrage devant être traité.

4. Un assemblage de dispositifs transporteurs selon la revendication 3, dans lequel ledit plateau porteur (19) comporte une ouverture (25).

5. Un assemblage de dispositifs transporteurs selon la revendication 4, dans lequel ladite ouverture (25) dudit plateau porteur (19) a une surface non inférieure au tiers de la surface totale dudit plateau porteur.

FIG. 1

FIG. 2

EP 0 160 305 B1

FIG. 3

11

1   6

10        9        10

FIG. 4

24
19        25

18a        18b
S₁        S₂

T

11        11

16a        16b

22

12a        12b

23

14a 14b

12a        12b

13a        13b

16a        16b

24

2

# FIG. 5

# FIG. 6

# FIG. 7

# F I G. 8

RATIO OF OPENING AREA TO
ENTIRE AREA OF CARRIER PLATE

# FIG. 9